(19) Europäisches Patentamt
European Patent Office
Office européen des brevets

(11) Veröffentlichungsnummer: **0 054 630**
**A1**

# (12) EUROPÄISCHE PATENTANMELDUNG

(21) Anmeldenummer: **81107803.9**

(22) Anmeldetag: **01.10.81**

(51) Int. Cl.³: **B 60 T 17/00**

(30) Priorität: **20.12.80 DE 3048335**

(43) Veröffentlichungstag der Anmeldung: **30.06.82**
**Patentblatt 82/26**

(84) Benannte Vertragsstaaten: **AT CH DE FR GB IT LI NL SE**

(71) Anmelder: **Wabco Fahrzeugbremsen GmbH, Am Lindener Hafen 21 Postfach 91 12 80, D-3000 Hannover 91 (DE)**

(72) Erfinder: **Pohl, Wolfgang, Im Stühe 56, D-3008 Garbsen 6 (DE)**
Erfinder: **Ulrich, Helmut, Schiergrund 19, D-3257 Springe 1 (DE)**
Erfinder: **Bartscher, Peter, Berliner Strasse 12B, D-3000 Hannover 91 (BE)**
Erfinder: **Clark, David John, 25 Carline Road, Lincoln LN 1 HL (GB)**

(74) Vertreter: **Schrödter, Manfred, WABCO Fahrzeugbremsen GmbH Postfach 91 12 80 Am Lindener Hafen 21, D-3000 Hannover 91 (DE)**

## (54) Frostschutzpumpe.

(57) Frostschutzpumpe zum Einbringen von flüssigen Frostschutzmitteln in Druckluftanlagen, insbesondere in Druckluftbremsanlagen von Kraftfahrzeugen. In einem Pumpengehäuse (1) ist eine erste vom Druckmittel durchströmte Kammer (2) vorgesehen, welche über zwei Anschlüsse zum einen mit einer Druckmittelquelle und zum anderen mit einem Verbraucher verbunden ist.

Die vom Druckmittel durchströmte Kammer (2) ist über ein Ventil (18, 19) mit einer zweiten Kammer (8) zur Aufnahme von Frostschutzmittel verbindbar.

Im Pumpengehäuse ist ein Pumpenkolben (4) zur Betätigung des Ventils vorgesehen. Die Kammer zur Aufnahme von Frostschutzmittel ist über Bohrungen (9, 10, 12) mit einem Frostschutzmittel-Vorratsbehälter verbindbar.

Um bei Sommerbetrieb des Fahrzeugs den Antrieb für den Pumpenkolben nicht entfernen zu müssen, ist zwischen dem Frostschutzmittel-Vorratsbehälter (13) und der das Frostschutzmittel aufnehmenden Kammer (8) ein Absperrventil (11) angeordnet, so daß der Pumpenkolben zwar auch bei Sommerbetrieb betätigt, jedoch kein Frostschutzmittel gefördert wird.

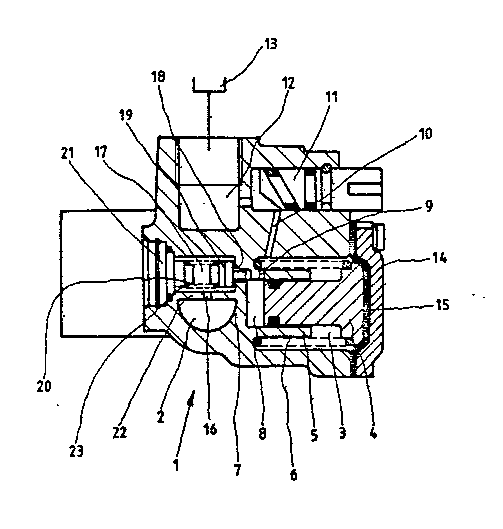

13
18
12
11
19
10
21
17
9
14
15
20
2
16
8
5
3
4
23
22
1
7
6

EP 0 054 630 A1

0054630



Hannover, den 16.12.80
WP 62/80 K/Gr

WABCO Fahrzeugbremsen GmbH, Hannover

Frostschutzpumpe

Die Erfindung betrifft eine Frostschutzpumpe zum Einbringen von flüssigen Frostschutzmitteln in Druckluftanlagen, insbesondere Druckluftbremsanlagen von Kraftfahrzeugen, gemäß dem Oberbegriff des Patentanspruchs 1.

Eine Frostschutzpumpe der eingangs genannten Art ist aus der DE-PS 24 01 677 bekannt. Diese bekannte Frostschutzpumpe besteht im wesentlichen aus einem Gehäuse, welches eine erste vom Druckmittel durchströmte Kammer aufweist, in die ein Ventil hineinragt, über welches die vom Druckmittel durchströmte Kammer mit einer zweiten das Frostschutzmittel aufnehmenden Kammer verbindbar ist. Das Ventil wird von einem Kolben betätigt, der über ein Kanalsystem, welches mit der vom Druckmittel durchströmten Kammer in Verbindung steht, mit Druckmittel beaufschlagbar ist.

Derartige Frostschutzpumpen sind bei Kraftfahrzeugen erforderlich, deren Bremssystem mit Druckluft gespeist wird, da hier im Winterbetrieb das Problem auftritt, daß die in der Druckluft enthaltenen Kondensate gefrieren können und so ein sicherer Betrieb der Bremsanlage u.U. nicht mehr gewährleistet ist.
Da jedoch im Sommerbetrieb eine solche Frostschutzpumpe überflüssig ist, wird der Antrieb für die Frostschutzpumpe abgestellt.
Das Abstellen der Frostschutzpumpe hat jedoch den Nachteil, daß sich z.B. der Pumpenkolben, die Ventile und dergleiche wegen Korrosionserscheinungen festsetzen können, so daß bei erneuter Inbetriebnahme der Frostschutzpumpe die Funktionstücktigkeit stark beeinträchtigt sein kann.

Der Erfindung liegt deshalb die Aufgabe zugrunde, eine Frostschutzpumpe der eingangs genannten Art in der Weise zu verbessern, daß ein Festsetzen der beweglichen Teile der Frostschutzpumpe verhindert wird.

Diese Aufgabe wird mit der im Patentanspruch 1 angegebenen Erfindung gelöst.

Vorteilhafte Ausgestaltungen und Weiterbildungen der Erfindung sind in den Unteransprüchen aufgezeigt.

Durch die Erfindung wird insbesondere der Vorteil erzielt, daß ständige Funktionsbereitschaft der Frostschutzpumpe sichergestellt ist und daß auf Wartungsarbeiten verzichtet werden kann, da der Kolben der Frostschutzpumpe auch

dann betätigt wird, wenn die Frostschutzmittelzufuhr unterbrochen wird.

Da die Möglichkeit gegeben ist, den Kolben der Frostschutzpumpe mittels verschleißfester Dichtringe (z.B. Teflon) gegen das Pumpengehäuse abzudichten, erhöht sich die Lebensdauer der Frostschutzpumpe erheblich.

Die Erfindung wird nachstehend anhand eines Ausführungsbeispiels, welches in der Zeichnung dargestellt ist, näher erläutert.

Die Abbildung zeigt eine Frostschutzpumpe mit einer Absperreinrichtung zwischen Frostschutzmittelvorratsbehälter und Pumpe.

In der Abbildung wird ein Pumpengehäuse 1 gezeigt, welches eine als Durchgangskanal ausgebildete Kammer 2 aufweist, die über einen ersten nicht dargestellten Druckmittelanschluß mit einer nicht gezeigten Druckmittelerzeugungsanlage und über einen zweiten Druckmittelanschluß mit einem ebenfalls nicht dargestellten Verbraucher in Verbindung steht. An die Kammer 2 grenzt eine Kammer 3 an, die zur Aufnahme eines Kolbens 4 dient. Der Kolben 4 ist in einer in der Kammer 3 angeordneten zylindrischen Führung 5 gegen die Kraft einer Druckfeder 6 verschiebbar gelagert. Der Boden des Kolbens 4 schließt zusammen mit der die Kammer 2 von der Kammer 3 trennenden Wand 7 eine weitere in ihrem Volumen veränderbare Kammer 8 ein. Die Kammer 8 ist über eine in der Führung 5 vorgesehene Bohrung 9 mit der Kammer 3 ständig verbunden. Eine weitere im Pumpengehäuse 1 vorgesehene Bohrung 10 verbindet die Kammer 3 über ein Absperrventil 11 mit einer Anschlußbohrung 12 für einen Frostschutzmittelvorratsbehälter 13. Die Kammer 3 wird von einem Gehäusedeckel 14 verschlossen.

Zwischen dem Gehäusedeckel 14 und dem Kolben 4 ist eine Membran 15 derart angeordnet, daß sie ständig am Kolben 4 anliegt. Ein hier nicht dargestellter Kanal verbindet die als Durchgangskanal ausgebildete Kammer 2 mit dem Raum zwischen Gehäusedeckel 14 und Membran 15. Die Kammer 2 ist durch eine Wand 22 von einer Ventilkammer 23 getrennt. Die Wand 22 wird von einer Durchgangsbohrung 16 durchdrungen, welche die Ventilkammer 23 mit der Kammer 2 verbindet. In der Ventilkammer 23 ist ein mit einem Dichtelement 19 versehenar Ventilverschlußkörper 17 angeordnet. Der Ventilverschlußkörper 17 ist in einer Führung 21 gegen die Kraft einer Feder 20 verschiebbar gelagert. Die Wand 7 weist ventilkammerseitig einen Ventilsitz 18 auf, der mit dem Dichtelement 19 des Ventilverschlußkörpers 17 ein Auslaßventil 17, 18, 19 bildet.

Die Funktion der in der Abbildung gezeigten Frostschutzpumpe wird nachstehend näher erläutert.

In der Leerlaufphase der Druckmittelerzeugungsanlage ist die Kammer 2 der Frostschutzpumpe drucklos. Der Kolben 4 befindet sich in der dargestellten Stellung und das Auslaßventil 17, 18, 19 ist geschlossen. In dieser Stellung fließt Frostschutzmittel vom Frostschutzmittelvorratsbehälter 13 durch die Anschlußbohrung 12, das in der Offenstellung befindliche Absperrventil 11 und den Kanal 10 in die Kammer 3. Von der Kammer 3 gelangt das Frostschutzmittel durch die Bohrung 9 in die durch den Kolben 4 begrenzte Kammer 8. Schaltet nun der in der Abbildung nicht gezeigte, dem Druckmittelverbraucher vorgeschaltete Druckregler in die Förderstellung um, so strömt Druckmittel von der Druckmittelerzeugungsanlage durch die Kammer 2 der Frostschutzpumpe zum Verbraucher. Gleichzeitig gelangt Druckmittel durch das in der Abbildung nicht dargestellte Kanalsystem in den Raum zwischen dem Gehäusedeckel 14 und der Membran 15. Der sich in dem Raum aufbauende Druck verschiebt den Kolben 4 gegen die Kraft der Druckfeder 6 in Richtung auf die Wand 7 zu. Das Volumen der durch den Kolbenboden und die Wand 7 gebildeten Kammer 8 verringert sich und das in der Kammer 8 befindliche Frostschutzmittel wird gegen das Dichtelement 19 des Auslaßventils 17, 18, 19 gedrückt. Bei weiterer Verschiebung des Kolbens 4 in Richtung auf die Wand 7 zu verringert sich auch das Volumen der Kammer 8. Durch den sich nun verstärkenden Druck wird der Ventilverschlußkörper 17 gegen die Kraft der Feder 20 verschoben, so daß das Dichtelement 19 vom Ventilsitz 18 abhebt. Das Frostschutzmittel wird in die Ventilkammer 23 gedrückt und fließt von dort in die Bohrung 16.
Beschleunigt durch die Sogwirkung des durch die Kammer 2 strömenden Druckmittels gelangt das Frostschutzmittel in den Druckmittelstrom.

Schaltet der Druckregler wieder in die Leerlaufstellung, so fällt der Druck in der Kammer 2 und auch im Raum zwischen dem Gehäusedeckel 14 und der Membran 15 ab. Der Kolben 4 wird von der Druckfeder 6 wieder nach rechts in seine Ausgangsstellung verschoben, so daß sich das Volumen der Kammer 8 wieder vergrößert. Da das Frostschutzmittel jetzt nicht mehr gegen das Dichtelement 19 des Ventilverschlußkörper 17 gedrückt wird, verschiebt die Feder 20 den Ventilverschlußkörper 17 wieder in Richtung auf den Ventilsitz 18 zu und schließt so das Auslaßventil 17,18,19. Der Kolben 4 hat nun die Bohrung 9 wieder freigegeben, so daß wieder Frostschutzmittel in die Kammer 8 nachfließen kann.

Soll im Sommerbetrieb kein Frostschutzmittel in das Druckmittel eingeführt werden, so wird das Absperrventil 11 umgeschaltet,um ein Leerpumpen des Frostschutzmittelvorratsbehälters zu verhindern. Die von der Kammer 3 zum Absperrventil 11 führende Bohrung 10 ist in dieser Stellung des Absperrventils 11 gegen die mit dem Frostschutzmittelvorratsbehälter 13 verbundene Anschlußbohrung 12 abgesperrt, so daß kein Frostschutzmittel in die Kammer 3 und somit in die Kammer 8 gelangen kann. Der auch weiterhin über die Membran 15 vom Druckmittel beaufschlagte Kolben 4 führt jetzt bei jedem Umschalten des Druckreglers in die Förderstellung einen Leerhub aus, so daß ein Festsetzen des Kolbens 4 in der Zeit, in welcher kein Frostschutzmittel in das Druckmittel der Bremsanlage befördert werden soll, ausgeschlossen ist.

0054630



Patentansprüche

1. Frostschutzpumpe zum Einbringen von flüssigen Frostschutzmitteln in Druckluftanlagen, insbesondere in Druckluftbremsanlagen von Kraftfahrzeugen, welche die folgenden Merkmale aufweist:

   a) in einem Pumpengehäuse (1) ist eine erste vom Druckmittel durchströmte Kammer (2) vorgesehen, welche über zwei Anschlüsse zum einen mit einer Druckmittelerzeugungsanlage und zum anderen mit einem Verbraucher verbunden ist;

   b) das Pumpengehäuse (1) weist eine zweite Kammer (8) zur Aufnahme von Frostschutzmittel auf;

   c) die vom Druckmittel durchströmte Kammer (2) ist über ein Ventil (17, 18, 19) mit der Kammer (8) zur Aufnahme des Frostschutzmittels verbindbar;

   d) die Kammer (8) zur Aufnahme von Frostschutzmittel ist über Bohrungen (9, 10) mit einem Frostschutzmittel-Vorratsbehälter (13) verbindbar;

   e) im Pumpengehäuse (1) ist ein Pumpenkolben (4) zur Betätigung des Ventils (17, 18, 19) vorgesehen;

   f) es sind Mittel zum Antrieb des Pumpenkolbens (4) vorgesehen;

   gekennzeichnet durch die folgenden Merkmale:

   g) zwischen dem Frostschutzmittelvorratsbehälter (13) und der das Frostschutzmittel aufnehmenden Kammer (3, 8) ist ein Absperrventil (11) angeordnet;

h) die Mittel zum Antrieb des Pumpenkolbens (4) stehen ständig mit dem Pumpenkolben (4) in Wirkverbindung.

2. Frostschutzpumpe nach Anspruch 1, dadurch gekennzeichnet, daß eine Fläche des Pumpenkolbens (4) zwecks Druckmittelbeaufschlagung über wenigstens einen Kanal mit der vom Druckmittel durchströmten Kammer (2) verbindbar ist.

3. Frostschutzpumpe nach Anspruch 2, dadurch gekennzeichnet, daß der Kanal nicht absperrbar ist.

Europäisches Patentamt

# EUROPÄISCHER RECHERCHENBERICHT

0054630

Nummer der Anmeldung

EP 81 10 7803.9

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| A | DE - A1 - 2 624 651 (KNORR-BREMSE) * Anspruch 1; Fig. 1, Positionen 44, 46 * | 1 | B 60 T 17/00 |
| | -- | | |
| A | DE - B - 1 264 274 (WESTINGHOUSE) | | |
| | -- | | |
| D,A | DE - C3 - 2 401 677 (GRAUBREMSE) | | |
| | ---- | | |

RECHERCHIERTE SACHGEBIETE (Int. Cl.3)

B 60 T 17/00

KATEGORIE DER GENANNTEN DOKUMENTE

X: von besonderer Bedeutung allein betrachtet
Y: von besonderer Bedeutung in Verbindung mit einer anderen Veroffentlichung derselben Kategorie
A: technologischer Hintergrund
O: nichtschriftliche Offenbarung
P: Zwischenliteratur
T: der Erfindung zugrunde liegende Theorien oder Grundsatze
E: alteres Patentdokument, das jedoch erst am oder nach dem Anmeldedatum veroffentlicht worden ist
D: in der Anmeldung angefuhrtes Dokument
L: aus andern Grunden angefuhrtes Dokument
&: Mitglied der gleichen Patentfamilie, übereinstimmendes Dokument

X Der vorliegende Recherchenbericht wurde fur alle Patentanspruche erstellt.

| Recherchenort | Abschlußdatum der Recherche | Prufer |
|---|---|---|
| Berlin | 17-03-1982 | LUDWIG |

EPA form 1503.1 06.78